# EUROPEAN PATENT APPLICATION

(11) **EP 4 838 279 A1**
(43) Date of publication of application: **11.11.2026**
(21) Application number: 26169837.7
(22) Date of filing: 31.03.2026
(51) Int. Cl.: G02B 6/44, F16L 37/24, H02G 3/32

(54) **OPTICAL FIBER TUBE HOLDER**

(30) Priority: 05.05.2025 IN 202511043469
(71) Applicant: Sterlite Technologies Limited, Gurugram, Haryana 122102 (IN)
(72) Inventor: ALLAM, Sadek El, 1 - 21040 Origgio (IT); PURICELLA, Alessandro, 1 - 21040 Origgio (IT)
(74) Representative: Valet Patent Services Limited

(57) **Abstract**

The present disclosure relates to a fiber tube holder device (100) designed for use in telecom enclosures (10) comprising a piston (102) movable relative to the main body to secure one or more fiber tubes (106) between them in a locked configuration (108), effectively restricting both axial and lateral movement of the tubes and the main body (104) with side walls (110) featuring a series of groove features (114) positioned at predefined intervals and rear wall (112). Further, the central pole (116) in the main body supports the piston (102), enabling its movement along the pole. The piston includes a central orifice (118) designed to fit onto the central pole, incorporating a locking mechanism that limits the rotary motion of the piston.

## Description

### TECHNICAL FIELD

Embodiments of the present disclosure relate to the field of optical fiber cables and more particularly relates to an optical fiber tube holder for organizing the optical fiber tubes of different diameters in a telecom enclosure.

This application claims the benefit of Indian Application No. IN202511043469, titled "OPTICAL FIBER TUBE HOLDER" filed by the applicant on May 5, 2025, which is incorporated herein by reference in its entirety.

### Background Art

Optical fiber is increasingly being used for a variety of applications, including broadband applications such as voice, video and data transmissions. It is a current trend in telecommunications to use optical fibers in place of the more conventional transmission media. As a result, fiber optic communication systems are becoming prevalent in part because service providers want to deliver high bandwidth communication capabilities to customers.

Cable holders are essential components inside the enclosures that are used to secure, organize and help the routing of the optical fiber tubes from the entry of the enclosure to the one or more trays placed in the enclosure. The cable holder helps prevent damage by maintaining proper bend radii, reducing stress on the tubes, and shielding them from physical impacts or environmental factors. Additionally, they support long-term reliability by minimizing the risk of tangling, bending, or accidental displacement, ensuring the optimal performance of the fiber optic network.

To hold and organize a plurality of optical fiber tubes or cables with different diameters inside using multiple cable holders is a known challenge in the enclosures. The cable holders face challenges as a single enclosure can house multiple optical fiber tubes or cables, in such scenarios there arises a possibility of the optical fiber tubes or cables to be of different diameters.

Further, there is a major problem that the existing cable holders don't block the vertical sliding of the optical fiber tubes or cables. Therefore, it becomes hard to accommodate fiber tubes or cables of various diameters in a single enclosure.

Patent application US6636680B2 discloses a cable holder mounted on a base with an opening to receive one or more optical fiber cables. The holder includes a pair of holding arms with a gradual bend at the terminal portion for providing ease for entering optical fiber cables inside the holder. However, cables inside the holder are not fixed and hence can easily move and slip out of the holder. To overcome this problem, additional mounting components such as chassis and coupler are required

Another patent application WO02063734A1, describes another known technique where a tube holder is mounted on the ceiling of a sewage pipe with an opening facing down to receive the tubes. The tube holder has an inverted U-shape. Further, the holder is formed with pawls in its inlet and different types of tubes can be held by the tube holder. Multiple tubes can be organized in the holder but some additional mounting components such as plunger pins are required.

Yet another patent application US6684021B2 discloses an optical fiber tube holder mounted on a base. Where the tube holder includes a pair of spring arms for holding the optical fiber tubes. The optical fiber tubes can be inserted through a guiding slot inside the tube holder. The issue of tubes inside the holder being movable and not securely fixed is addressed by mounting a locking ring, which holds the tubes in place and prevents displacement.

The use of additional mounting components such as chassis, couplers, plunger pins, or locking rings can introduce several drawbacks. These include increased installation complexity and time, as the components must be carefully aligned and secured. They may also raise overall costs due to the need for extra materials and specialized hardware. Furthermore, these components can add to the system's weight and bulk, making it less suitable for compact or lightweight applications.

Maintenance and repairs may become more challenging, as disassembling and reassembling these components can be time-consuming. Lastly, improper installation or misalignment of these components could compromise the stability and performance they are intended to provide. Because of the circular or corrugated shape of the optical fiber tubes or cables, the tubes/cables can easily move due to a small amount of mechanical stress or vibration which need to be controlled.

Accordingly, to overcome the disadvantages of the prior arts, there is a need to provide a better technique to solve the aforementioned problems. Thus, the present disclosure provides an optical fiber tube holder for organizing the optical fiber tubes of different diameters in a telecom enclosure.

### SUMMARY OF THE DISCLOSURE

The present disclosure provides a fiber tube holder device (100) for a telecom enclosure (10), comprising a piston (102) and a main body (104), wherein the piston is movable with respect to the main body to secure one or more fiber tubes (106) between the piston and main body in a locked configuration (108), thereby restricting movement of the tubes.

In one embodiment, the piston (102) is configured to restrict both axial and lateral movement of the fiber tubes (106) by applying inward pressure and engaging with deformable elements (128) that fill gaps between the tubes, ensuring the tubes remain stably positioned.

The main body (104) comprises a central pole (116) mounted on the rear wall (112), which receives the piston (102) and allows the piston to move forward, backward, and rotate along the central pole to accommodate fiber tubes of varying diameters.

The piston (102) is designed to move not only axially along the central pole (116) but also to rotate to defined positions. This allows the piston to accommodate fiber tubes (106) of varying diameters and quantities within the same holder. Unlike prior art holders, which typically accommodate only fixed tube sizes or require additional mounting components, the present fiber tube holder can securely hold multiple tubes of different diameters without extra hardware. The combination of rotational and axial adjustment ensures each fiber tube is retained firmly, preventing axial and lateral movement even under mechanical stress or vibration.

The central pole (116) incorporates a collar (120) and a slit (122) that allows the piston to be inserted and prevents its removal when expanded. The variable diameter of the collar in compressed and expanded states interacts with the piston's central orifice (118) to achieve a secure locked configuration.

The piston (102) comprises deformable elements (128) that adjust to the diameter of the fiber tubes (106) and fill gaps between the tubes and the rear wall (112), further restricting axial and lateral movement.

One or more deformable elements (128) are provided on the piston (102) to fill gaps between the fiber tubes and the holder, including irregularities caused by different tube diameters or corrugated rear wall surfaces (112). These elements provide a dynamic frictional force that locks the tubes in place and prevents slippage under vibration or external mechanical stress. The deformable elements are tailored to the tube diameter, thereby allowing the holder to secure a wide range of fiber tube sizes without requiring additional clamps, plunger pins, or locking rings known in the prior art.

The main body (104) further comprises separation walls (124) forming multiple chambers (126), and the piston (102) includes separation slots (130) that engage with the separation walls to segregate different fiber tubes into separate regions.

The piston (102) includes protruded portions (132) at its ends that mate with groove features (114) on the side walls (110), enabling forward, backward, and rotational adjustment of the piston to lock fiber tubes of different diameters securely.

The rear wall (112) of the main body (104) comprises a corrugated inner surface to enhance frictional engagement with fiber tubes (106) when secured by the piston (102).

The fiber tube holder device (100) is designed as a retrofittable component for a telecom enclosure (10) and can be mounted using mounting features (134) on the main body without requiring additional locking hardware.

In accordance with an embodiment, the piston, deformable elements, and main body are configured to simultaneously restrict axial and lateral movement of multiple fiber tubes of different diameters, retaining the tubes in separate regions without additional hardware.

The piston (102) is adjustable in position and orientation along the central pole (116) and engages with groove features (114) and separation walls (124), enabling secure accommodation of fiber tubes of varying diameters and quantities.

Gaps between the fiber tubes (106) and the tube holder (100) can be filled by deformable elements (128) and/or corrugations on the rear wall (112), enhancing frictional retention under mechanical stress or vibration.

The piston (102) can rotate to defined positions to engage separation slots (130) with separation walls (124), thereby transitioning between an open configuration for tube insertion and a locked configuration preventing tube movement.

The fiber tube holder (100) is configured to organize multiple fiber tubes (106) into separate regions (126) based on type, diameter, or function, with the piston (102) selectively locking each region independently.

The device is retrofittable into a telecom enclosure (10) and provides complete tube retention without requiring additional external hardware, simplifying installation and reducing potential points of failure.

Unlike prior art cable holders that rely on separate locking rings, plunger pins, or spring-loaded arms, the fiber tube holder device (100) employs a combined mechanism of piston (102), deformable elements (128), and a slit-collar central pole (116) to achieve simultaneous axial and lateral retention. This configuration allows secure retention of multiple fiber tubes of different diameters without additional hardware, which is not suggested or motivated by the prior art. The interaction between deformable elements and corrugated rear wall provides a passive, self-adjusting grip, reducing complexity and installation steps, while ensuring secure positioning under mechanical vibration-an effect not achievable by conventional holders.

The combination of axial/lateral tube retention, adjustable piston rotation/positioning, deformable elements filling gaps dynamically, and a slit-collar mechanism for secure locking, ensures multiple tubes of varying diameters are securely held without additional fasteners.

The foregoing objectives of the present disclosure are attained by employing an optical fiber tube holder for organizing the optical fiber tubes of different diameters in a telecom enclosure.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 illustrates a telecom enclosure (10) housing one or more fiber tube holder device (100);
Fig. 2 illustrates an exploded view of the fiber tube holder device (100);
Fig. 3 illustrates a front view of fiber tube holder device (100);
Fig. 4 illustrates an exploded view of the piston (102) of fiber tube holder device (100);
Fig. 5 illustrates a perspective view of fiber tube holder device (100) in accordance with an embodiment of the disclosure;
Fig. 6 illustrates a top view of fiber tube holder device (100) in another embodiment of the disclosure;
Fig. 7 illustrates a top view of fiber tube holder device (100) in accordance with another embodiment of the disclosure;
Fig. 8A illustrates closed position of piston (102)in the fiber tube holder device (100), in accordance with an embodiment of the disclosure;
Fig. 8B illustrates rotation of piston (102) and insertion of one or more fiber tubes (106)in the fiber tube holder device (100), in accordance with an embodiment of the disclosure;
Fig. 8C illustrates pushing the piston (102) inward with respect to the fiber tube holder device (100), in accordance with an embodiment of the disclosure;
Fig. 8D illustrates securing and locking one or more fiber tubes (106)in the fiber tube holder device (100), in accordance with an embodiment of the disclosure;
Fig. 9 illustrates a perspective view of fiber tube holder device (100) securing low diameter fiber tubes (106) in accordance with yet another embodiment of the disclosure;
Fig. 10 illustrates a perspective view of fiber tube holder device (100) securing one or more fiber tubes (106) in accordance with yet another embodiment of the disclosure;
Fig. 11 illustrates a top view of fiber tube holder device (100) securing low diameter fiber tubes (106) in accordance with yet another embodiment of the disclosure;
Fig. 12 illustrates a top view of fiber tube holder device (100) securing one or more fibers tubes (106) in accordance with yet another embodiment of the disclosure;
Fig. 13 illustrates a method (200)for locking one or more fiber tube (106) in a fiber tube holder device (100)in accordance with yet another embodiment of the disclosure;
Fig. 14 illustrates a method (300) for unlocking one or more fiber tubes (106) in a fiber tube holder device (100) in accordance with yet another embodiment of the disclosure; and
Fig. 15 illustrates a method (400) for assembling a fiber tube holder device (100) in a telecom enclosure (10) in accordance with yet another embodiment of the disclosure.

The optical fibre cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

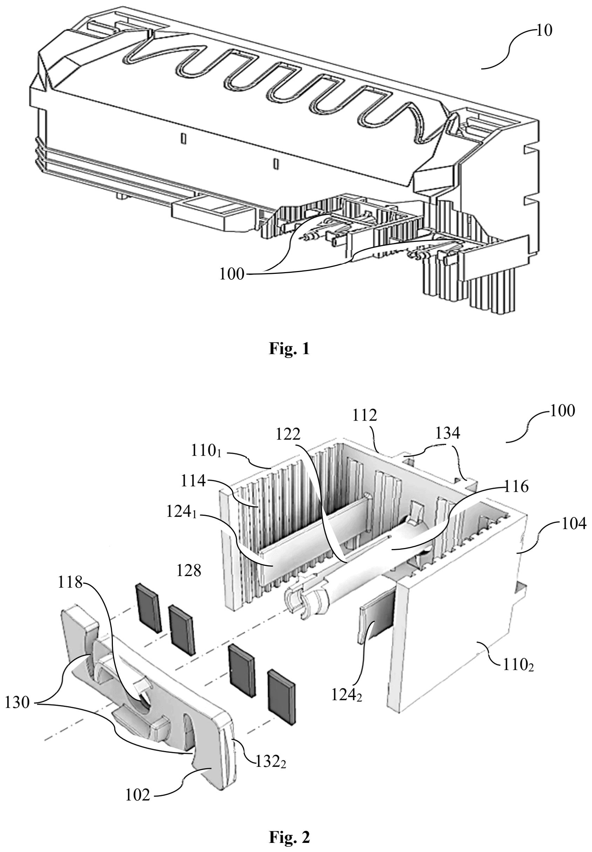

Fig. 1 illustrates a perspective view of a telecom enclosure (10) encasing one or more fiber tube holder devices (100). In particular, the tube holder (100) is designed as a retrofitted component for the telecom enclosure (10). Moreover, the fiber tube holder device (100) secured with the telecom enclosure (10) using one or more mounting features (134) integrated into the main body (104) of the holder. Further, the fiber tube holder device (100) is placed at the input or output side of the telecom enclosure (10) so that the cable or fiber tube (106) can be held to avoid lateral or axial movement of the cable or fiber tube. In general, a telecom enclosure is a box that contains the devices to connect various fiber optic cables for telecommunication applications.

Fig. 2 illustrates the fiber tube holder device (100) consists of a snap-fitted piston (102) adapted to rotate and move inside the cable holder (100). In particular, the piston (102) is provided with one or more deformable elements (128) coupled to it that fill gaps between the fiber tubes (106). Moreover, the fiber tube holder device (100) features a main body (104) segmented into multiple longitudinal sections designed to hold a plurality of tubes or cables. Further, the main body (104) comprises a rear wall (112).

In accordance with an embodiment of the present disclosure, the inner surface of the rear wall (112) of main body (104)further comprises teeth on the inside surface of the tube holder (100) and, the outer surface of rear wall (112) comprises one or more mounting features (134) that are extending outwards, to provide fixation of the main body (104) of the fiber tube holder device (100) with the telecom enclosure (10). Further, the one or more side walls (110) are extending perpendicularly from the both ends of the rear wall (112).

In various embodiments, the extension of one end of the rear wall (112) is a first side wall (110₁) and the other end extends to make a second side wall (110₂). The one or more side walls (110) of the main body (104) comprises groove features (114) on the inside surface of the one or more side walls (110). The groove features (114) on side walls (110) of main body (104) are provided to mate with the protruded portion (132) of the piston (102), that fits on the one or more side walls (110). The piston (102) is adjustable in the forward direction and backward direction to facilitate fiber tubes (106) of different diameter or number of fiber tubes placed inside the fiber tube holder device (100) for locking the movement of fiber tubes.

The main body (104) may include separation walls (124) forming multiple chambers (126), and the piston (102) may include separation slots (130) to selectively engage the separation walls. This configuration allows different fiber tubes to be segregated into separate regions, preventing entanglement and facilitating organized routing within a single holder. The interaction of the piston slots with the separation walls allows each region to be independently locked, which is not disclosed in prior art holders, where multiple tubes of different types require separate holders or additional components.

In accordance with an embodiment of the present disclosure, central pole (116) extends forward from the inner surface of the rear wall (112) of the main body (104). In particular, the central pole (116) receives the piston (102) for locking, unlocking and assembling purposes. The inner surface of the rear wall (112) comprises one or more separation walls (124). Moreover, separation walls (124₁, 124₂) form four separate chambers for segregation of one or more types of fiber tubes. Further, the central pole (116) parts the inner surface into equal sections, between the first side wall (110₁) and second side wall (110₂). These sections are further divided by the separation walls (124).

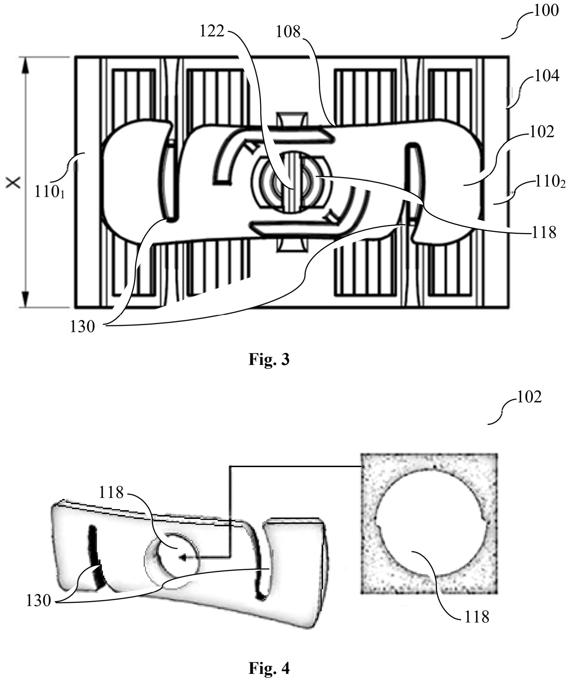

Fig. 3 illustrates a front view of the fiber tube holder device (100) with a piston (102) mounted on the central pole (116) with the help of a central orifice (118). The central orifice (118) is an aperture that helps the central pole (116) to couple the piston (102). Further, the central pole (116) has a slit (122) that parts it in two portions. The said slit (122) enables compression and decompression of the central pole (116).

In accordance with an embodiment of the present disclosure, when the slit (122) is in the compressed state, the diameter of central orifice (118) of the piston (102) is greater than the diameter of central pole (116) which makes it easier for the central pole (116) to be inserted on the piston (102). Alternatively, when the slit (122) is in the decompressed state, the diameter of the central orifice (118) of the piston (102) is substantially equal to the diameter of the central pole (116) so that the piston (102) functions in locked configuration (108).

Fig. 4 illustrates a particular shape of the central orifice (118) on the piston(102). The central orifice (118) is specifically configured to tighten the lock when the piston is in a closed position. In particular, one or more separation slots (130), are provided to engage with the one or more separation walls (124). Moreover, when the piston (102) is rotated for the purpose of locking, unlocking one or more fiber tubes (106). Further, the one or more separation slots (130) only engage with the one or more separation walls (124) when the direction of rotation of the piston (102) is clockwise.

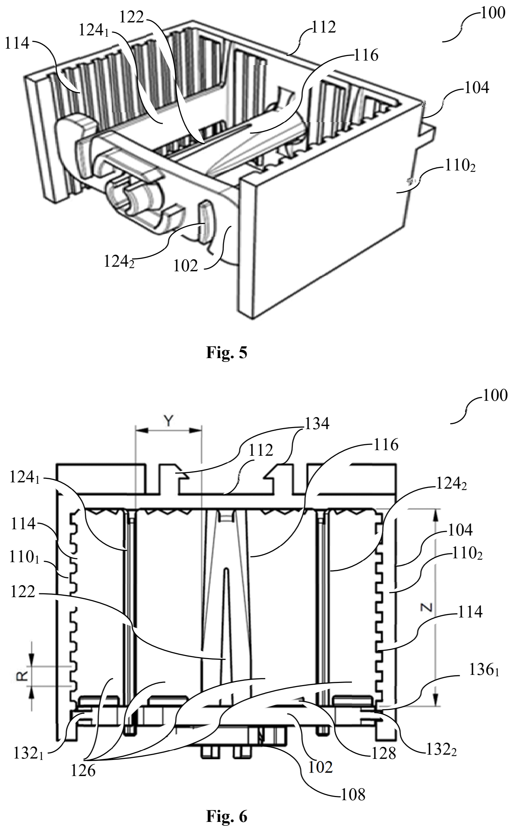

Fig. 5 illustrates the perspective view of the fiber tube holder device (100). Where the piston (102) is in the "position 0" i.e. locked position. The central orifice (118) is snap fitted to the central pole (116)

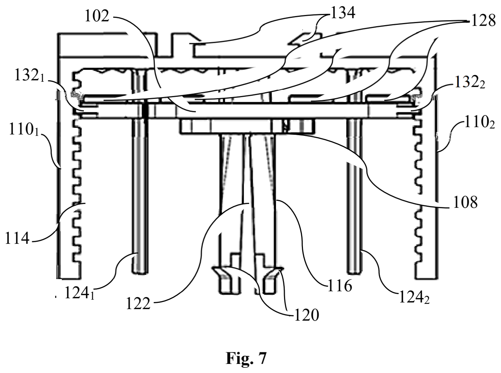

Fig. 6 and Fig. 7 illustrates the top view of the fiber tube holder device (100). The piston (102) is provided with a protruded portion (132) at both ends. Moreover, the protruded portion (132) engages with the groove features (114)that offer locking, unlocking and assembling of the one or more fiber tubes (106). Further, the piston (102) comprises a first protruded portion (132₁) and a second protruded portion (132₂). The first protruded portion (132₁) engages with the one or more groove features (114) on the inner surface of the first side wall (110₁).

The central pole (116) includes a collar (120) with a slit (122), allowing it to expand and compress during piston insertion. In the compressed state, the piston (102) can be easily mounted on the central pole, and in the expanded state, the piston is securely restrained, forming a locked configuration (108). This design ensures the piston is removable only under controlled compression, providing both retention security and ease of installation. This feature is not suggested by the prior art, which relies on separate fasteners or locking rings.

In accordance with an embodiment of the present disclosure, the second protruded portion (132₂) engages with the one or more groove features (114) on the inner surface of the second side wall (110₂). Further, the engagement of the respective protruded portion (132₁, 132₂) with the one or more groove features (114) provides locking, unlocking and assembling of the one or more fiber tubes (106).

In accordance with an embodiment of the present disclosure, the central pole (116) is extending perpendicularly forward from the rear wall (112), helping in the mounting of the piston (102). The central pole (116) has a slit (122) that bifurcates the central pole (116) into two equal portions. At the tips of these bifurcated sections, a collar (120) is provided. When axial pressure is applied inwardly on the collar (120), the compression allows for the easy insertion of the piston (102). Further, when axial pressure is applied outwardly, the expansion of the collar (120) prevents the piston (102) from being removed from the central pole (116). The slit (122) enables the compression and decompression of the central pole (116).

The inner surface of the rear wall (112) is corrugated to increase frictional engagement with the fiber tubes. This corrugated design works synergistically with the piston (102) and deformable elements (128) to ensure the tubes do not move, even when multiple tubes of different diameters are accommodated. Unlike smooth-surface holders in the prior art, which require extra hardware to prevent slippage, this corrugated design provides a passive retention mechanism that is self-adjusting and reduces installation complexity.

In the compressed state, the diameter of the central orifice (118) of the piston (102) exceeds the diameter of the central pole (116), making it easier to insert the central pole (116) into the piston (102). Further, in the decompressed state, the diameter of the central orifice (118) matches the diameter of the central pole (116), allowing the piston (102) to remain securely locked in place (108).

Fig. 7 the piston (102) is adapted to move to-and-fro on the central pole (116), depending on the diameter of the fiber tube or cable (106). In particular, after assembling the fiber tube or cable (106), the piston (102) is locked to further secure the one or more fiber tubes (106). Moreover, the one or more separation walls (124) mounted on the rear wall create one or more separate regions (126), allowing for the segregation of various types of fiber tubes (106) and locked within the fiber tube holder device (100). Further, the mounting feature (134) is provided on the rear wall (112) on the main body (104) to install the fiber tube holder device (100) in the telecom enclosure (10).

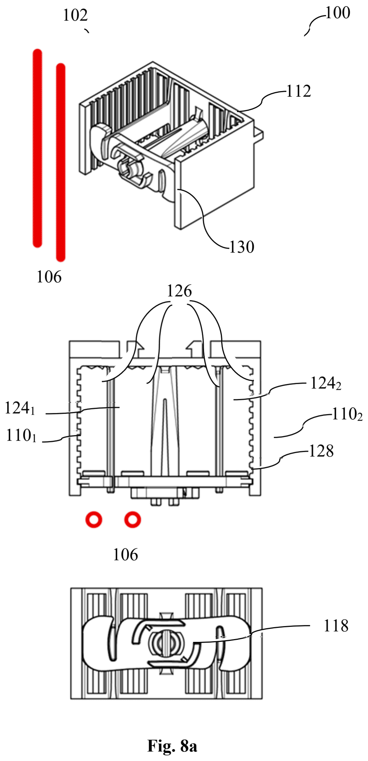

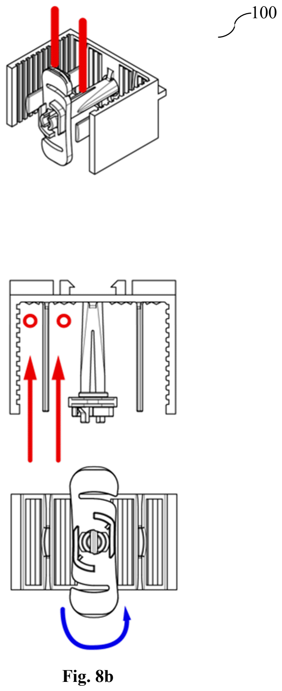

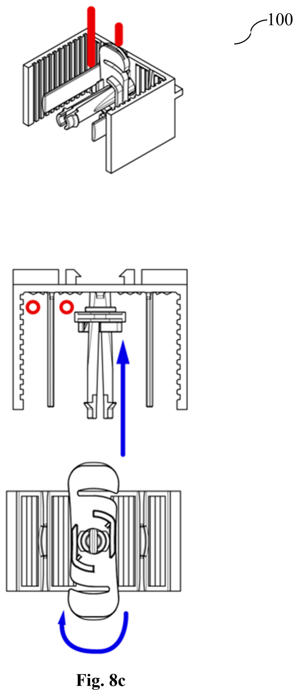

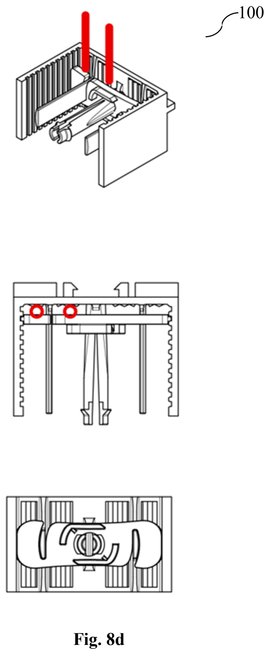

Fig. 8A, 8B, 8C and 8D illustrate the rotation movement of the piston (102). In particular, the piston (102) coupled to the fiber tube holder device (100) is at position 0 or closed state. Due to the shape of the central orifice (118) on the piston(102), the valve tightens the lock when the piston (102) is in position 0 or closed position, to provide the piston (102) self-locking.

Moreover, when the piston (102) is rotated 90° anti clockwise, the separation slots (130) disengage with the respective separation walls (124₁,124₂) and position 1 is achieved, where the one or more separate regions (126) are available to access and the one or more fiber tube or cable (106) can be inserted. Further, the piston (102) is rotatably move forward and rearward according to the size of the fiber tubes.

Once the fiber tubes (106) are placed, the piston (102) is rotated 90° clockwise, where the separation slots (130) engage with the separation walls (124₁,124₂) and the initial position 0 is achieved. The teeth provided on the rear wall (112) and the deformable elements (128) ensures the needed grip to the one or more fiber tube (106).

In accordance with an embodiment of the present disclosure, the piston (102) is pushed inward with respect to the side walls (110).

Further, the piston (102) is rotated back 90° clockwise so that the separation slots (130) engage with the respective separation walls (124₁,124₂) i.e., position 0 or closed/locked state. The deformable elements (128) are affixed to the piston (102) using one or more adhesive mechanisms. The deformable elements (128) can adjust their shape to conform to the outer contours of the cables or fiber tubes, effectively filling the gap between the piston (102) and the fiber tubes (106) to completely prevent their movement.

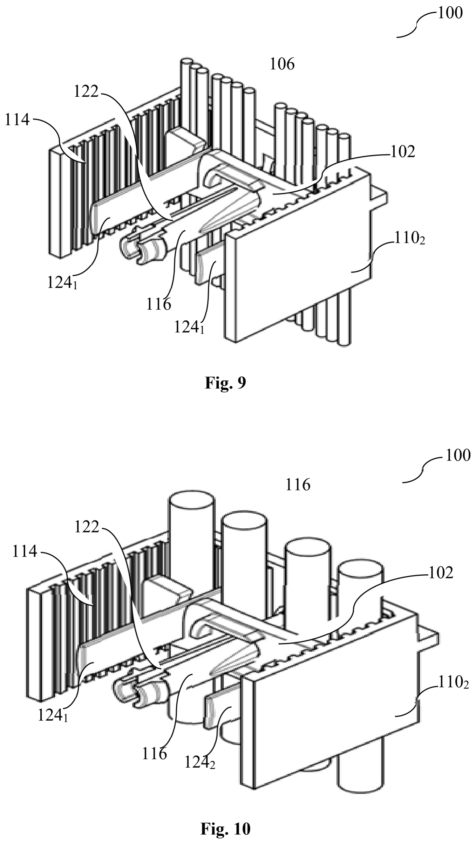

Fig. 9 and Fig. 10 are perspective views of a fiber tube holder device (100) holding one or more fiber tubes (106) having different diameter is illustrated. As shown in Figure 9, the piston is adjusted to secure the low diameter cables. The piston (102) is rotatable according to the diameter of the one or more fiber tubes (106). In Fig. 10, the one or more fiber tube (106) having diameter greater than the low diameter is illustrated.

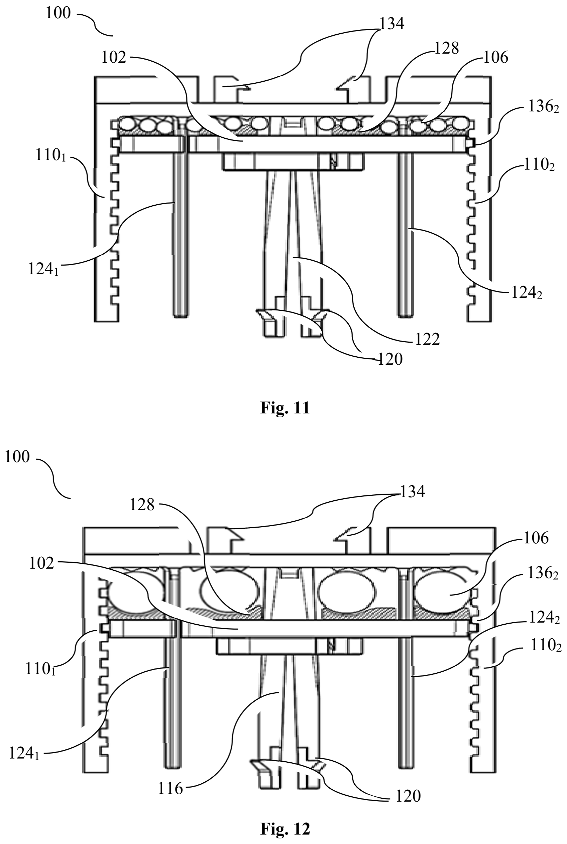

Fig. 11 and Fig. 12 illustrate the top view of the fiber tube holder device (100) accommodating one or more fiber tubes (106) having different diameters. Moreover, the one or more deformable elements (128) secures the one or more fiber tubes (106) by filling the gap among the one or more fiber tubes (106). Further, the corrugated shape on the rear wall (112) provides grip to the one or more fiber tubes (106).

In accordance with an embodiment of the present disclosure, the one or more fiber tubes (106) are tight buffer fibers. In particular, the tight buffered fiber cables are generally constructed with 900µm buffered fibers surrounded by aramid yarn or e-glass strength members jacketed in a low smoke zero halogen (LSZH) outer jacket. Further, the tight buffered fiber cables can be used both indoors and outdoors and are designed in such a way that the buffering material is in direct contact with the fiber.

In accordance with an embodiment of the present disclosure, the length of the side wall (110) is N. Distance between the one or more grooves is R. The respective separation chambers are separated by distance Y.

In accordance with an embodiment of the present disclosure, the one or more fiber tubes (106) are low diameter cables.

In yet another embodiment of the disclosure, the one or more fiber tubes (106) are transportation tubes, loose tubes, and protective tubes.

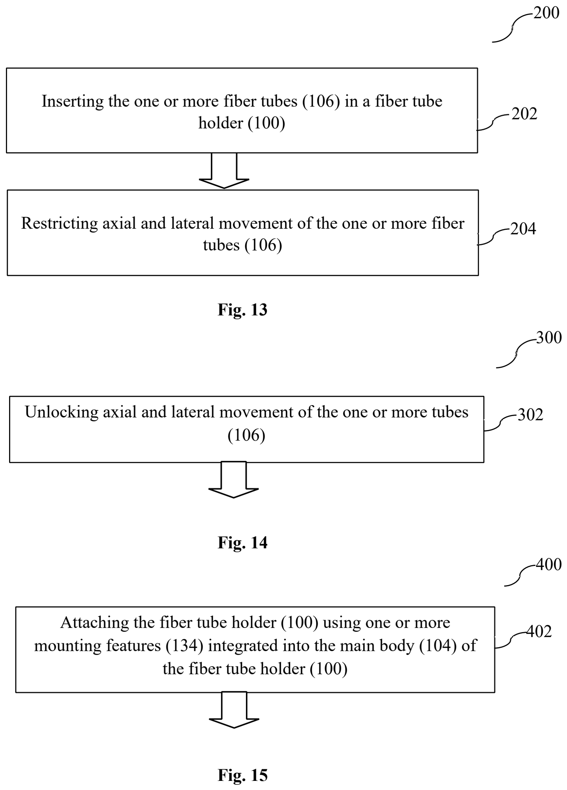

Fig. 13 illustrates a method (200) includes locking one or more fiber tubes (106) in a telecom enclosure (10) involves the following steps:

First the one or more fiber tubes (106) are inserted (202) into the fiber tube holder device (100).

Second step the axial and lateral movement of the fiber tubes (106) is restricted (204)by locking them between a main body (104) and a piston (102) of the fiber tube holder device (100). This is achieved by adjusting the piston from its initial position to a new position relative to the main body (104) to securely hold the fiber tubes. The one or more fiber tubes (106) inserted into the fiber tube holder device (100) serve as either ingress or egress tubes for the telecom enclosure (10).Further, the piston is moved from a first position (136₁) to a second position (136₂) using one or more groove features (114) on the main body (104) and one or more protruding portions (132) on the piston (102) that engage with the grooved features (114).

Fig. 14 illustrates a method (300) includes unlocking one or more fiber tubes (106) in a telecom enclosure(10). The step involves unlocking (302) the axial and lateral movement of the fiber tubes (106), which are secured between the main body (104) and the piston (102) of a fiber tube holder device (100). The unlocking (302) is done by adjusting the piston from a second position (136₂) to a first position (136₁) relative to the main body (104), thereby releasing the fiber tubes (106). The fiber tube holder device (100) is a retrofitted component of the telecom enclosure (10).

Further, the method (400) for assembling a fiber tube holder device (100) in a telecom (10) illustrated in Fig. 15, involves the fiber tube holder being attached (402) with the help of one or more mounting features (134). The one or more mounting features (134) are attached with the main body (104) of the fiber tube holder device (100). Moreover, the fiber tube holder includes one or more tubes (106) secured between the main body (104) and a piston (102). The deformable elements (128) help securing the one or more fiber tubes (106).

The fiber tube holder device (100) is designed as a retrofittable component for telecom enclosures (10), allowing installation without additional hardware such as mounting brackets or locking rings. This reduces installation time and complexity while providing full retention of fiber tubes. The combination of piston movement, deformable elements, corrugated rear wall, and separation walls allows secure tube retention without requiring any external fasteners, which is an improvement over prior art solutions.

In alternative embodiments, the fiber tube holder device may accommodate any number of fiber tubes of varying diameters, and the piston may adjust its position and rotation to match the tube arrangement. Deformable elements and rear wall corrugations may be adapted to tube diameters or materials. These embodiments highlight the conceptual principles of simultaneous axial/lateral retention, independent chamber locking, and modular retrofit installation.

In an alternative embodiment, the piston (102) and deformable elements (128) may be configured to retain one or more fiber tubes (106) independently of additional structural features such as groove features (114) or separation walls (124). In this embodiment, the deformable elements (128) may be variably shaped or compressible to accommodate tubes of different diameters, providing secure axial and lateral retention solely by frictional engagement and piston actuation. This embodiment enables simplified fiber tube retention systems without the need for complex interlocking structures.

In another embodiment, the main body (104) may include multiple separation walls (124) to create segregated regions (126), while the piston (102) is provided with configurable separation slots (130) to selectively engage or disengage with the separation walls. This allows individual regions to be independently locked or unlocked for insertion or removal of tubes (106), providing modularity and flexibility in managing fiber tubes of varying diameters or types.

In an alternative embodiment, the central pole (116) may incorporate a slit-collar mechanism (120,122) that permits axial and rotational movement of the piston (102) during insertion and subsequently expands to prevent removal. The diameter of the collar in compressed and expanded states interacts with the central orifice (118) of the piston to achieve a secure lock. This concept can be independently claimed as a novel locking mechanism for fiber tube retention without relying on deformable elements or separation walls.

In another embodiment, the rear wall (112) of the main body (104) may comprise a corrugated inner surface, configured to enhance frictional engagement with fiber tubes (106) when pressed by the piston (102) and/or deformable elements (128). This configuration provides independent axial and lateral retention, improving resistance to vibration or mechanical stress, and can be implemented without protruded portions (132) or groove features (114).

In an alternative embodiment, the fiber tube holder device (100) may be designed as a retrofittable module for telecom enclosures (10), using mounting features (134) to secure the holder without additional external hardware. This embodiment focuses on ease of installation and removal, enabling compact designs for enclosures with limited space, while maintaining secure retention of fiber tubes (106).

In yet another embodiment, the fiber tube holder device (100) may allow the piston (102) to selectively lock one or more regions (126) independently, such that certain fiber tubes (106) can be inserted, removed, or adjusted without affecting other secured tubes. This enables partial access, staged installation, or maintenance without disturbing the overall tube organization, and may be implemented using combinations of separation slots (130), separation walls (124), or protruded portions (132) on the piston.

The present disclosure contemplates multiple independent inventive concepts that may be claimed in separate divisional applications. For instance, (i) the slit-collar locking mechanism of the central pole with piston, (ii) the use of deformable elements and corrugated rear wall for frictional retention, (iii) modular segregation of fiber tubes using separation walls and piston slots, and (iv) a retrofittable holder module for compact enclosures. Each of these concepts provides distinct technical solutions that are independently inventive and non-obvious, and can be claimed in separate applications without introducing new matter.

Advantageously, the fiber tube holder device (100) provides easy access to the fiber tubes or cables, allowing users to open the holder effortlessly and access the entire recess. It is also versatile in accommodating fiber tubes of various diameters within the same holder, with multiple separation walls and chambers enabling organized segregation of different types of tubes. Furthermore, the tubes or cables are securely immobilized relative to each other, as multiple deformable elements mounted on the piston effectively fill gaps between the tubes, ensuring stable retention even under mechanical stress or vibration.

In accordance with an embodiment of the present disclosure, the fiber tube holder device (100) are intended to include any type of the molding process and/or any additive methods(e.g., 3D printing, filament deposition FFF, selective laser sintering of metal/plastic dusts, without deviating from the scope of the present disclosure.

In accordance with an embodiment of the present disclosure, the fiber tube holder device (100) may be made of a material such as, but not limited to, metal, plastic, and the like. The plastic material may include, but is not limited to, Polypropylene, Polycarbonate Acrylonitrile Butadiene Styrene(PC-ABS), Acrylonitrile butadiene styrene (ABS), Polycarbonate (PC), glass fiber reinforced polypropylene, polyamide 6 (PA6), and the like.

Certain materials, such as PA6, PC-ABS, or glass-fiber reinforced polypropylene, are particularly suitable for the fiber tube holder device (100) due to their combination of mechanical strength, elasticity, and wear resistance. These materials allow precise molding of the slit-collar and deformable elements, ensuring durability under repeated insertion/removal of fiber tubes and resistance to vibration or mechanical stress in telecom environments. Such material selection is non-obvious as it balances flexibility for the deformable elements with rigidity for structural retention.

## Claims

1. A fiber tube holder device (100) for a telecom enclosure (10),**characterized in that**:
a piston (102); and
a main body (104), where the piston (102) is configured to move with respect to the main body (104) to secure one or more fiber tubes (106) between the piston
wherein the main body is in a locked configuration (108) thereby restricting movement of the one or more fiber tubes (106).

2. The fiber tube holder device (100) as claimed in claim 1, wherein the piston (102) is configured to restrict both axial and lateral movement of the one or more fiber tubes (106) by applying inward pressure and mating with deformable elements (128) filling gaps between tubes.

3. The fiber tube holder device (100) as claimed in claim 1, wherein the main body (104) comprising a central pole (116) mounted on the rear wall (112) to receive the piston (102) such that the piston (102) can move forward, backward, and rotate along the central pole (116).

4. The fiber tube holder device (100) as claimed in claim 1, wherein the central pole (116) comprises a collar (120) and a slit (122) that allows the piston (102) to be inserted and prevents its removal when expanded, wherein the variable diameter of the collar in compressed and expanded states interacts with the central orifice (118) of the piston to achieve a secure locked configuration. { Combined 9-11 into one claim and explicitly describes the slit-collar locking mechanism, which is a key inventive feature}

5. The fiber tube holder device (100) as claimed in claim 1, wherein the piston (102) comprises one or more deformable elements (128) that adjust to the diameter of the fiber tubes (106) and fill gaps between the tubes and the rear wall (112) to restrict axial and lateral movement. { Emphasized deformable elements adjusting to tube diameter, highlighting inventive feature}

6. The fiber tube holder device (100) as claimed in claim 1, wherein the main body (104) comprises one or more separation walls (124) mounted on the rear wall (112) forming multiple chambers (126), and the piston (102) comprises separation slots (130) configured to engage with the separation walls, such that different fiber tubes (106) are segregated into separate regions. { Combined separation walls + slots and emphasized segregation of tubes}

7. The fiber tube holder device (100) as claimed in claim 1, wherein the piston (102) comprises one or more protruded portions (132) at ends configured to mate with groove features (114) on the side walls (110) of the main body (104), thereby enabling forward, backward, and rotational adjustment of the piston to lock fiber tubes of different diameters. { Added forward/backward and rotational adjustment; emphasizes inventive tube-diameter adaptability}

8. The fiber tube holder device (100) as claimed in claim 1, wherein the rear wall (112) of the main body (104) comprises a corrugated inner surface to enhance frictional engagement with fiber tubes (106) when secured by the piston (102). { Added explicitly as a structural feature enhancing inventive step over smooth prior-art holders}

9. The fiber tube holder device (100) as claimed in claim 1, wherein the fiber tube holder device is a retrofittable component for a telecom enclosure (10) and can be mounted using the mounting features (134) on the main body (104) without additional locking hardware. { retrofittable feature and avoids extra components}

10. The fiber tube holder device (100) as claimed in any one of claims 1, wherein the piston (102), the deformable elements (128), and the main body (104) are configured to simultaneously restrict both axial and lateral movement of multiple fiber tubes (106) of different diameters, such that the tubes are retained in separate regions without additional mounting hardware.

11. The fiber tube holder device (100) as claimed in any one of claims 1, wherein the piston (102) is adjustable in position and orientation along the central pole (116) and in engagement with groove features (114) and separation walls (124), enabling secure accommodation of fiber tubes of varying diameters and quantities.

12. The fiber tube holder device (100) as claimed in any one of claims 1, wherein gaps between the fiber tubes (106) and the tube holder (100) are filled by deformable elements (128) and/or corrugations on the rear wall (112), thereby enhancing frictional retention under mechanical stress or vibration.

13. The fiber tube holder device (100) as claimed in any one of claims 1, wherein the piston (102) is configured to rotate to defined positions to engage separation slots (130) with separation walls (124), thereby transitioning between an open configuration for tube insertion and a locked configuration preventing tube movement.

14. The fiber tube holder device (100) as claimed in any one of claims 1, wherein the tube holder (100) is configured to organize multiple fiber tubes (106) into separate regions (126) based on type, diameter, or function, with the piston (102) selectively locking each region independently.

15. The fiber tube holder device (100) as claimed in any one of claims 1-14, wherein the device is retrofittable into a telecom enclosure (10) and provides complete tube retention without requiring additional external hardware, thereby simplifying installation and reducing potential points of failure.
